(19) Europäisches Patentamt
European Patent Office
Office européen des brevets

(11) **EP 3 402 065 A1**

(12) **EUROPEAN PATENT APPLICATION**

(43) Date of publication:
**14.11.2018 Bulletin 2018/46**

(51) Int Cl.:
**H02P 9/00** (2006.01)   **F03D 7/04** (2006.01)

(21) Application number: **18171501.2**

(22) Date of filing: **09.05.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.05.2017 IN 201741016383**

(71) Applicant: **General Electric Company Schenectady, NY 12345 (US)**

(72) Inventors:
• **GANIREDDY, Govardhan**
  **Salem, VA 24153 (US)**
• **SHUKLA, Saurabh**
  **Schenectady, NY 12345 (US)**
• **WAGONER, Robert Gregory**
  **Salem, VA 24153 (US)**

(74) Representative: **Foster, Christopher Michael**
  **General Electric Technology GmbH**
  **GE Corporate Intellectual Property**
  **Brown Boveri Strasse 7**
  **5400 Baden (CH)**

(54) **A POWER GENERATION SYSTEM AND A METHOD FOR OPERATING THE SAME**

(57) A method for operating a power generation system (100, 200, 300, 400) is presented. The method includes estimating, by a controller (176), at least one of a required load and input power of the doubly-fed induction generator (DFIG) (104) for a pre-determined future time duration. The method includes comparing, by the controller, the estimated at least one of the required load and the input power with a corresponding threshold value. Moreover, the method includes transitioning, by the controller, operation of the power generation system from a partial power conversion mode to a full power conversion mode by controlling switching of one or more of a plurality of switches if the estimated at least one of the required load and the input power is less than the corresponding threshold value, wherein the plurality of switches includes a first set of switches (156, 216) coupled to stator winding (218) of the DFIG.

FIG. 5

## Description

## BACKGROUND

Embodiments of the present invention generally relate to a power generation system, and in particular to a method and a system for operating the power generation system.

With the ever-growing energy requirement of the world, renewable sources of energy are considered as a promising solution. For example, wind energy due to advancement in technology and relative cost effectiveness has seen a large growth in such hybrid power generation markets. Currently available wind based power generation systems can be broadly categorized as full power conversion systems and partial power conversion systems. Doubly-fed induction generator (DFIG) based power generation systems using partial power conversion are generally realized as cost effective due to lower cost of partial power converter.

Some currently available DFIG based power generation systems employ a doubly-fed induction generator (DFIG), a power source such as a prime mover (e.g., wind turbine), and a partial power converter having at least two power converters coupled to each other via a direct current (DC) link. During operation of the power generation system, electrical power is generated by the DFIG which can be supplied to electrical loads and/or an electric grid coupled to the power generation system. However, in certain configurations of such power generation systems, a stator winding of the DFIG is directly interfaced to the utility grid. Consequently, such DFIG based power generation systems using partial power conversion are more prone to disturbances caused by the grid.

Higher wind speed sites are getting limited and newer wind farms are moving towards lower wind speed sites. Typically, in the DFIG based power generation systems using partial power conversion, voltage of the DC-link is maintained within a certain maximum threshold determined by the rating of the power semiconductor devices used in the converter.

## BRIEF DESCRIPTION

In accordance with one embodiment of the present specification, a method for operating a power generation system is presented. The power generation system includes a doubly-fed induction generator (DFIG) and a power conversion sub-system coupled to the DFIG. The method includes estimating, by a controller, at least one of a required load and input power of the DFIG for a pre-determined future time duration. The method further includes comparing, by the controller, the estimated at least one of the required load and the input power with a corresponding threshold value. Moreover, the method includes transitioning, by the controller, operation of the power generation system from a partial power conversion mode to a full power conversion mode by controlling switching of one or more of a plurality of switches if the estimated at least one of the required load and the input power is less than the corresponding threshold value, wherein the plurality of switches includes a first set of switches coupled to a stator winding of the DFIG.

In accordance with one embodiment of the present specification, a power generation system is presented. The power generation system includes a prime mover, a doubly-fed induction generator (DFIG) mechanically coupled to the prime mover and having a stator winding and a rotor winding, a power conversion sub-system electrically coupled to the DFIG, and a control sub-system. The control sub-system includes a plurality of switches, wherein the plurality of switches includes a first set of switches coupled to the stator winding and a point of common coupling (PCC). The control sub-system further includes a controller operatively coupled to the plurality of switches and configured to: estimate at least one of a required load and an input power of the DFIG for a pre-determined future time duration, comparing the estimated at least one of the required load and the input power with a corresponding threshold value, and transition operation of the power generation system from a partial power conversion mode to a full power conversion mode by controlling switching of one or more of a plurality of switches if the estimated at least one of the required load and the input power is less than the corresponding threshold value.

In accordance with one embodiment of the present specification, a method for operating a power generation system is presented. The power generation system includes a wind turbine, a doubly-fed induction generator (DFIG) coupled to the wind turbine, and a power conversion sub-system coupled to the DFIG. The method includes estimating, by a controller, a wind speed for a pre-determined future time duration. The method further includes comparing, by the controller, the estimated wind speed with a threshold value. Moreover, the method includes transitioning, by the controller, operation of the power generation system from a partial power conversion mode to a full power conversion mode by controlling switching of one or more of a plurality of switches if the estimated wind speed is less than the threshold value, wherein the plurality of switches includes a first set of switches coupled to a stator winding of the DFIG.

In accordance with one embodiment of the present specification, a power generation system is presented. The power generation system includes a wind turbine, a doubly-fed induction generator (DFIG) mechanically coupled to the wind turbine and having a stator winding and a rotor winding, a power conversion sub-system electrically coupled to the DFIG, and a control sub-system. The control sub-system includes a plurality of switches, wherein the plurality of switches includes a first set of switches coupled to the stator winding and a point of common coupling (PCC) and a second set of switches coupled to the rotor winding and the power conversion sub-system. The control sub-system further includes a controller operatively coupled to the plurality of switches. The controller is configured to estimate a wind speed for a pre-determined future time duration, compare the estimated wind speed with a threshold value, and transition operation of the power generation system from a partial power conversion mode to a full power conversion mode by controlling switching of one or more of a plurality of switches if the estimated wind speed is less than the threshold value.

## DRAWINGS

These and other features, aspects, and advantages of the present specification will become better understood when the following detailed description is read with reference to the accompanying drawings in which like characters represent like parts throughout the drawings, wherein:

FIG. 1 is a block diagram representation of a power generation system, in accordance with one embodiment of the present invention;

FIG. 2 is a block diagram representation of a power generation system, in accordance with another embodiment of the present invention;

FIG. 3 is a block diagram representation of a wind based power generation system, in accordance with one embodiment of the present invention;

FIG. 4 is a block diagram representation of a power generation system, in accordance with yet another embodiment of the present invention;

FIG. 5 is a flow diagram of a method for operating a power generation system, in accordance with one embodiment of the present invention;

FIG. 6 is a flow diagram of a method for operating a power generation system, in accordance with another embodiment of the present specification;

FIG. 7 is a flow diagram of a method for transitioning operation of a power generation system to a full power conversion mode, in accordance with one embodiment of the present invention;

FIG. 8 is a flow diagram of a method for transitioning operation of a power generation system to a full power conversion mode, in accordance with another embodiment of the present invention;

FIG. 9 is a flow diagram of a method for transitioning operation of a power generation system to a partial power conversion mode, in accordance with one embodiment of the present invention;

FIG. 10 is a flow diagram of a method for transitioning operation of a power generation system to a partial power conversion mode, in accordance with another embodiment of the present invention; and

FIG. 11 is a graphical representation of a hysteresis curve, in accordance with one embodiment of the present invention.

## DETAILED DESCRIPTION

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances, the modified term may sometimes not be appropriate, capable, or suitable.

In accordance with some embodiments of the present invention, a power generation system, and a method of operating the power generation system is disclosed. The power generation system includes a prime mover, a doubly-fed induction generator (DFIG) mechanically coupled to the prime mover and having a stator winding and a rotor winding, a power conversion sub-system electrically coupled to the DFIG, and a control sub-system. The control sub-system includes a plurality of switches, where the plurality of switches includes a first set of switches coupled to the stator winding and a point of common coupling (PCC). The control sub-system further includes a controller operatively coupled to the plurality of switches and configured to: estimate at least one of a required load and an input power of the DFIG for a pre-determined future time duration. The controller is further configured to compare the estimated at least one of the required load and the input power with a corresponding threshold value. The controller is further configured to transition operation of the power generation system from a partial power conversion mode to a full power conversion mode by controlling switching of one or more of a plurality of switches if the estimated at least one of the required load and the input power is less than the corresponding threshold value.

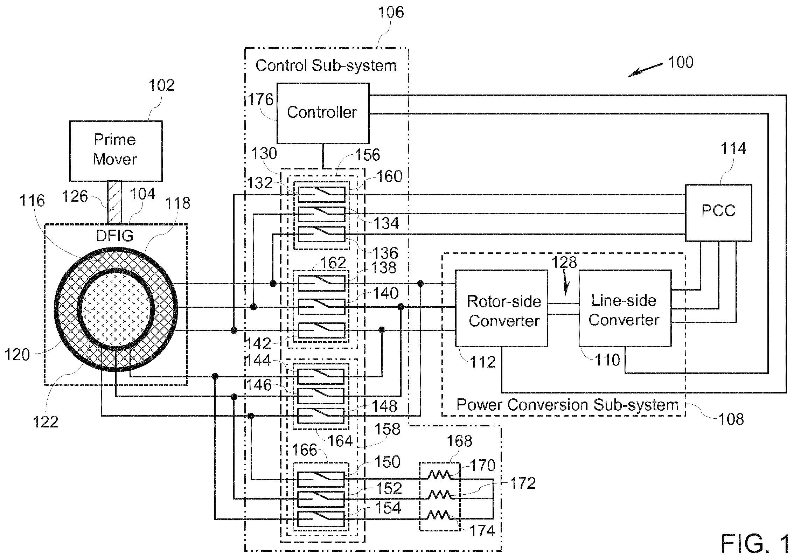

FIG. 1 is a block diagram representation of a power generation system (100) in accordance with one embodiment of the present invention. The power generation system (100) includes a prime mover (102), a doubly-fed induction generator (DFIG) 104, a control sub-system (106), and a power conversion sub-system (108) having a line-side converter (110) and a rotor-side converter (112). The DFIG (104) is operatively coupled to a point of common coupling (PCC) (114) and the power conversion sub-system (108). The PCC (114) may represent a junction terminal where a stator winding 118 of the DFIG (104) and terminals of the power conversion sub-system (108) are electrically connected. In some embodiments, the PCC (114) may be coupled to an electric grid (not shown) and/or local electrical loads (not shown) via a transformer (not shown). The power generation system (100) is configured to generate an alternating current (AC) electrical power and supply the AC electrical power to the electric grid and/or the local electrical loads via the PCC (114). The electrical power at the PCC (114) may be single phase power or multi-phase power such as three-phase electrical power.

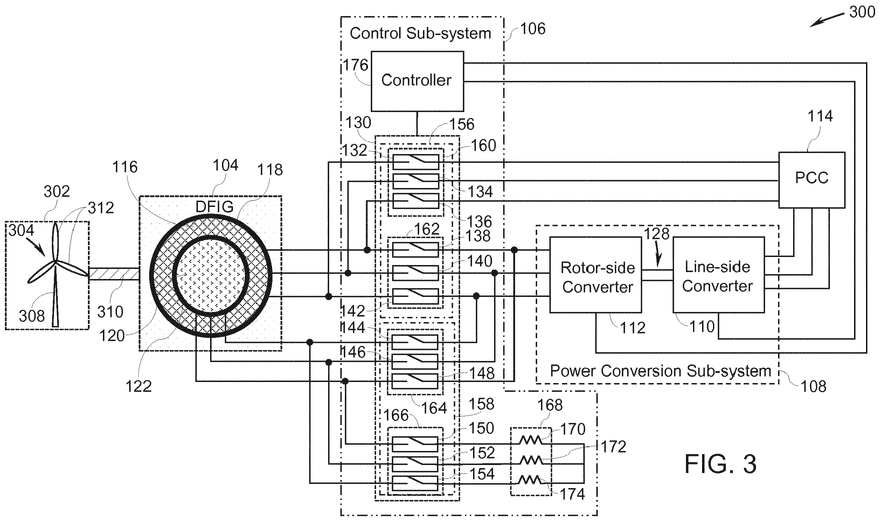

The prime mover (102) is configured to impart a rotational motion to a rotary element (*e.g.*, a rotor) of the DFIG (104). Non-limiting examples of the prime mover (102) may include a wind turbine (see FIG. 3), a hydro turbine, an engine that may be operable at variable speeds, a gas turbine, a compressor, or combinations thereof.

The DFIG (104) includes a stator (116), the stator winding (118) wound on the stator (116), a rotor (120), and a rotor winding (122) wound on the rotor (120). In some embodiments, both the stator winding (118) and the rotor winding (122) may be multi-phase windings such as three-phase windings. The DFIG (104) is mechanically coupled to the prime mover (102). For example, the rotor (120) of the DFIG (104) is mechanically coupled to a rotary element of the prime mover (102) via a shaft (126) such that rotations of the rotary element of the prime mover (102) cause rotations of the rotor (120) of the DFIG (104).

The rotor (120) of the DFIG (104) is operated at a rotational speed which may be a synchronous speed, a sub-synchronous speed, or a super-synchronous speed depending on the rotational speed of the rotary element of the prime mover (102). In one embodiment, the synchronous speed of the rotor (120) may be defined using equation (1).

$$N_s = \frac{120 * f}{p} \qquad (1)$$

With reference to the equation (1), $N_s$ represents the synchronous speed of the rotor (120), $p$ represents a number of poles of the rotor (120), and $f$ represents a frequency of a voltage generated at the stator winding (118). Accordingly, a sub-synchronous speed of the rotor (120) is defined as any speed that is lower than the synchronous speed of the rotor (120). Similarly, a super- synchronous speed of the rotor (120) is defined as any speed that is higher than the synchronous speed of the rotor (120).

During operation, the DFIG (104) is configured to generate electrical power at the stator winding (118) depending on the rotational speed of the rotor (120). The electrical power that is generated at the stator winding (118) is hereinafter alternatively referred to as a "stator power" ($P_{Stator}$). Further, the DFIG (104) is configured to generate or receive electrical power at the rotor winding (122) depending on the rotational speed of the rotor (120). For example, the DFIG (104) is configured to generate electrical power at the rotor winding (122) when the rotor (120) is operated at a super-synchronous speed. The DFIG (104) is configured to receive the electrical power at the rotor winding (122) when the rotor (120) is operated at a sub-synchronous speed. The electrical power that is generated or received at the rotor winding (122) is hereinafter alternatively referred to as a "slip power." The magnitude of the slip power ($P_{Slip}$) is dependent on a slip value of the DFIG (104). In one embodiment, the slip value S may be determined using equation (2).

$$S = \frac{N_s - N_r}{N_s} \qquad (2)$$

where $N_s$ represents the synchronous speed of the rotor (120) and $N_r$ represents revolutions per minute (rpm) of the rotor (120). At the synchronous speed ($N_s$), no power is received or generated at the rotor winding (122).

The power conversion sub-system (108) is electrically coupled to the rotor winding (122) via the control sub-system (106). The power conversion sub-system (108) includes the rotor-side converter (112) and the line-side converter (110) coupled to each other via a direct current (DC) link (128). The DC-link (128) may include at least two conductors (not shown) where one conductor is maintained at a positive potential and another conductor maintained at a negative potential. The DC-link (128) may also include a DC-link capacitor (not shown) electrically coupled to the at least two conductors.

The rotor-side converter (112) is electrically coupled to the rotor winding (122) of the DFIG (104). Specifically, the rotor-side converter (112) is electrically coupled to the rotor winding (122) via the control sub-system (106). The line-side converter (110) is electrically coupled to the PCC (114), either directly or via a transformer (not shown). The rotor-side converter (112) may be an AC-DC converter configured to convert AC power into DC power. In another embodiment, the rotor-side converter (112) may be a DC-AC converter. The line-side converter (110) may be a DC-AC converter configured to convert the DC power to AC power. In another embodiment, the line-side converter (110) may be a AC-DC converter. Further, the stator winding (118) is coupled to the PCC (114) via the control sub-system (106).

The control sub-system (106) includes a plurality of switches (132, 134, 136, 138, 140, 142, 144, 146, 148, 150, 152, and 154). The plurality of switches (132, 134, 136, 138, 140, 142, 144, 146, 148, 150, 152, and 154) are hereinafter also referred to as a group of switches (130). In some embodiments, the group of switches (130) may be semiconductor switches. Non-limiting examples of such semiconductor switches may include transistors, gate commutated thyristors, field effect transistors, insulated gate bipolar transistors, gate turn-off thyristors, static induction transistors, static induction thyristors, or combinations thereof. Moreover, materials used to manufacture the semiconductor switch may include, but are not limited to, silicon (Si), germanium (Ge), silicon carbide (SiC), gallium nitride (GaN), gallium arsenide (GaAs) or combinations thereof. Although the control sub-system (106) is shown as having twelve switches, the number of switches of the control sub-system (106) vary depending on the application.

The group of switches (130) includes a first set of switches (156) and a second set of switches (158). The first set of switches (156) includes a first sub-set of switches (160) including the switches (132, 134, 136), and a second sub-set of switches (162) including the switches (138, 140, 142). The second set of switches (158) includes a third sub-set of switches (164) including the switches (144, 146, 148), and a fourth sub-set of switches (166) including the switches (150, 152, 154).

In the illustrated embodiment, the first set of switches (156) is coupled to the stator winding (118) and the second set of switches (158) is coupled to the rotor winding (122). In particular, the first sub-set of switches (160) is electrically coupled to the stator winding (118) and the PCC (114). The second sub-set of switches (162) is electrically coupled to the stator winding (118) and the power conversion sub-system (108). The third sub-set of switches (164) is electrically coupled to the rotor winding (122) and the power conversion sub-system (108). In some embodiments, the fourth sub-set of switches (166) is electrically coupled to the rotor winding (122) and an impedance bank (168). The impedance bank (168) includes three resistors (170, 172, 174). Within the impedance bank (168), one terminal of each of the resistors (170), (172), (174) is connected to each other and other terminals of the resistors (170), (172), (174) are connected to the switches (150), (152), (154) respectively. In certain embodiments, use of the impedance bank (168) may be avoided and rotor winding (122) can be directly shorted. In such configuration, while one power terminal of each of the fourth sub-set of switches (186) is connected to the rotor winding (122), other power terminals of the fourth sub-set of switches (186) are connected to each other.

The control sub-system (106) also includes a controller (176) operatively coupled to the group of switches (130) and configured to selectively control switching of one or more switches of the group of switches (130). In some embodiments, the controller (176) may also be operatively coupled to the rotor-side converter (112) and the line-side converter (110) to control functionalities of the rotor-side converter (112) and the line-side converter (110) for controlling power flow therethrough. In some embodiments, the controller 176 may also be coupled to another supervisory controller (not shown) and configured to control operations of one or more of the group of switches (130), the rotor-side converter (112) and the line-side converter (110) based on control commands/setpoints received from the supervisory controller. In some embodiments, the controller (176) may include a specially programmed general purpose computer, an electronic processor such as a microprocessor, a digital signal processor, and/or a microcontroller. Further, the controller (176) may include input/output ports, and a storage medium, such as an electronic memory. Various examples of the microprocessor include, but are not limited to, a reduced instruction set computing (RISC) architecture type microprocessor or a complex instruction set computing (CISC) architecture type microprocessor. Further, the microprocessor may be a single-core type or multi-core type. Alternatively, the controller (176) may be implemented as hardware elements such as circuit boards with processors or as software running on a processor such as a personal computer (PC), or a microcontroller.

When operation of the power generation system (100) is initiated, the controller (176) may operate the power generation system (100) in a partial power conversion mode. In the partial power conversion mode, the stator winding (118) is electrically connected to the PCC (114) and the rotor winding (122) is electrically connected to the power conversion sub-system (108). In particular, in the partial power conversion mode, the first sub-set of switches (160) and the third sub-set of switches (164) are operated in a conducting state whereas the second sub-set of switches (162) and the fourth sub-set of switches (166) are operated in a non-conducting state. Any switch of the group of switches (130), when operated in the conducting state, allows flow of current therethrough. Any switch of the group of switches (130), when operated in the non-conducting state, does not allow flow of current therethrough.

During operation of the power generation system (100), the controller (176) is configured to estimate at least one of a required load and input power of the DFIG (104) for a pre-determined future time duration. The pre-determined future time duration may be defined in units of minutes or hours, for example. If the prime mover (102) operates using a renewable energy such as, but not limited to, wind energy, tidal energy, and/or hydro energy, the controller (176) is configured to estimate an input power of the DFIG (104). Examples of such prime movers may include a wind turbine (see FIG. 3), a hydro turbine, and the like. In some embodiments, if the prime mover (102) is a controllable system such as an engine, a gas turbine, a compressor, and the like, the controller (176) is configured to estimate a required load of the DFIG (104).

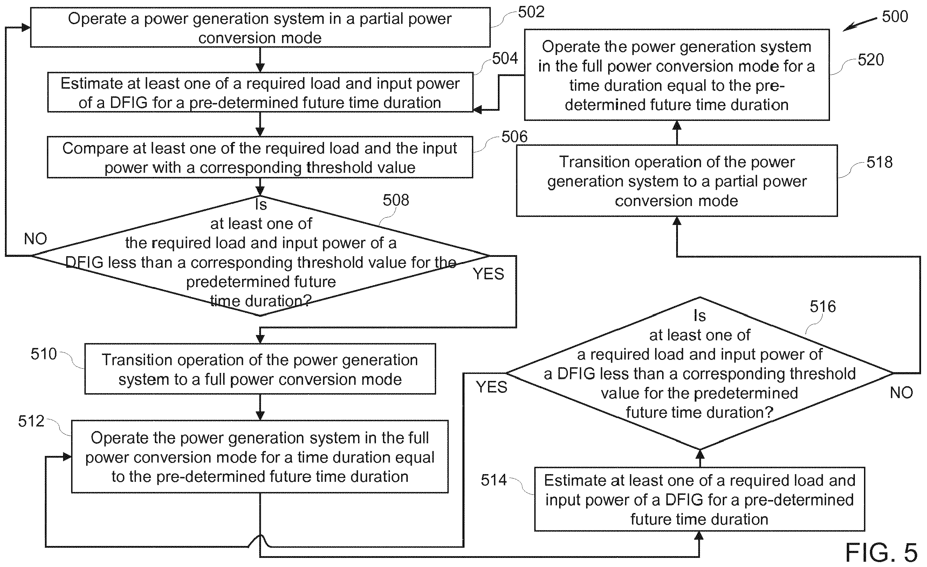

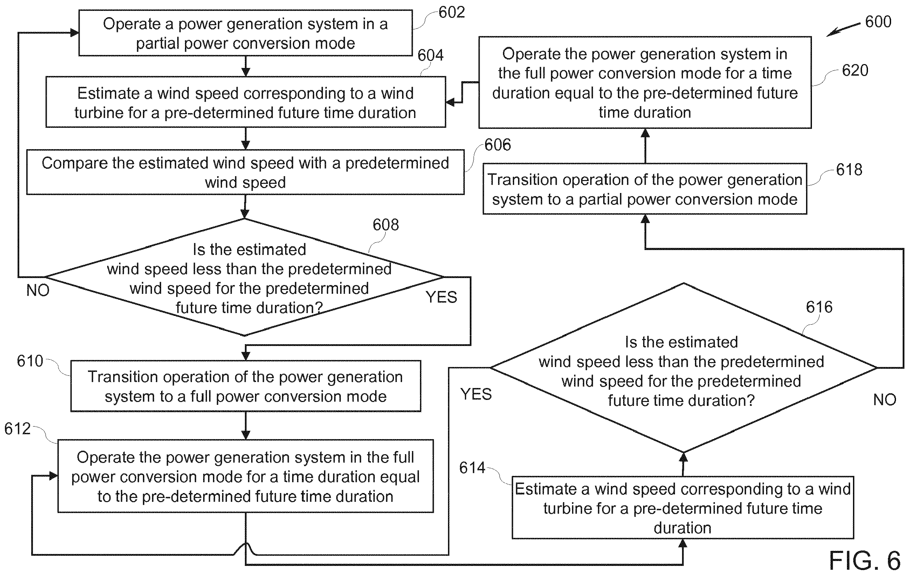

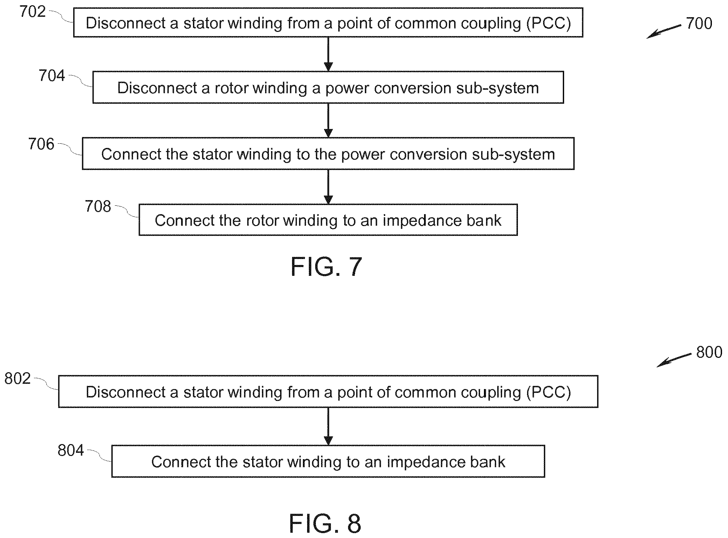

Further, the controller (176) is configured to compare the estimated at least one of the required load and the input power with a corresponding threshold value. Additionally, the controller (176) is configured to transition operation of the power generation system (100) from the partial power conversion mode to a full power conversion mode by controlling switching of one or more of the plurality of switches (130) if the estimated at least one of the required load and the input power is less than the corresponding threshold value. Further details of operating the power generation system (100) is described in conjunction the flow diagrams of FIGS. 5 and 6. Also, details of transitioning the operation of the power generation system (100) from the partial power conversion mode to the full power conversion mode and vice-versa are described in conjunction with FIGS. 7-10.

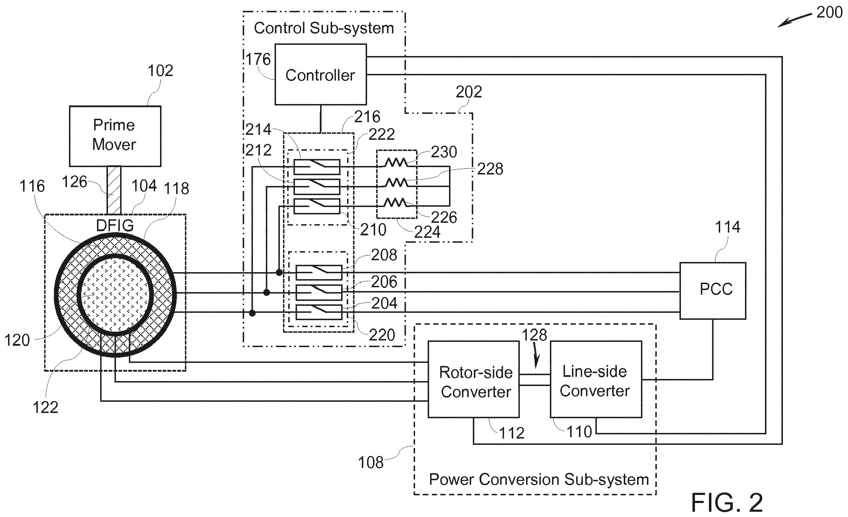

FIG. 2 is a block diagram representation of a power generation system (200) in accordance with another embodiment of the present invention. The power generation system (200) includes the prime mover (102), the DFIG (104), a control sub-system (202), and the power conversion sub-system (108) having the rotor-side converter (112) and the line-side converter (110).

The control sub-system (202) includes a plurality of switches (204, 206, 208, 210, 212, 214), hereinafter collectively referred to as a set of switches (216). The set of switches (216) is electrically coupled to the stator winding (118) of the DFIG (104). More particularly, the set of switches (216) includes a first sub-set of switches (220) including the switches (204, 206, 08) and a second sub-set of switches (222) including the switches (210, 212, 214).

The first sub-set of switches (220) is coupled to the stator winding (118) and the PCC (114). The second sub-set of switches (222) is coupled to the stator winding (118) and an impedance bank (224). The impedance bank (224) includes three resistors (226, 228, 230). Within the impedance bank (224), one terminal of each of the resistor (226, 228, 230 is connected to each other and other terminals of the resistors (226, 228, 230) are connected to switches (210), (212), (214), respectively. In certain embodiments, use of the impedance bank (224) may be avoided and the stator winding (118) can be directly shorted. In such configuration, while one power terminal of each of the second sub-set of switches (222) is connected to the stator winding (118), other power terminals of the second sub-set of switches (222) are connected to each other.

The controller (176) is operatively coupled to the set of switches (216) and configured to selectively control switching of one or more switches of the set of switches (216). In some embodiments, the controller (176) may also be operatively coupled to the rotor-side converter (112) and the line-side converter (110). In particular, the controller (176) may be configured to control switching of the set of switches (216) such that the power generation system (200) may be transitioned from the partial power conversion mode to the full power conversion mode, and vice-versa. Further details of operating the power generation system (200) is described in conjunction flow diagrams of FIGS. 5 and 6.

FIG. 3 is a block diagram representation of a wind based power generation system (300) in accordance with one embodiment of the present invention. The power generation system (300) includes a wind turbine (302), the DFIG (104), the control sub-system (106), and the power conversion sub-system (108) having the rotor-side converter (112), the line-side converter (110). In comparison to FIG. 1, in the embodiment of FIG. 3, a wind turbine (302) is used as a prime mover.

The wind turbine (302) includes a rotor (304), a tower (308), and a shaft (310) coupled to the rotor (304). The rotor (304) is mounted on the tower (308). The rotor 304 includes a plurality of rotor blades (312) coupled to the shaft (310). The wind turbine (302) is operatively coupled to the DFIG (104) via the shaft (310) directly or through a gear box (not shown). During operation, based on a speed and direction of wind, the rotor blades (312) rotate, causing the shaft (310) to rotate. The rotational speed of the shaft (310) may be based on various parameters including, but not limited to, a pitch the rotor blades (312) and a torque exerted on the rotor blades (312). The rotations of the shaft (310) cause rotations of the rotor (120) of the DFIG (104) leading to generation of the stator power ($P_{Stator}$) and the slip power ($P_{Slip}$) depending on speed of the wind turbine (302) generated by wind.

The control sub-system (106) is configured to enhance the electrical power production by the wind based power generation system (300). In particular, the controller (176) of the control sub-system (106) is configured to control switching of the group of switches (130) such that the power generation system (300) is transitioned from the partial power conversion mode to the full power conversion mode and vice-versa. Further details of operating the power generation system (300) is described in conjunction flow diagrams of FIGS. 5 and 6.

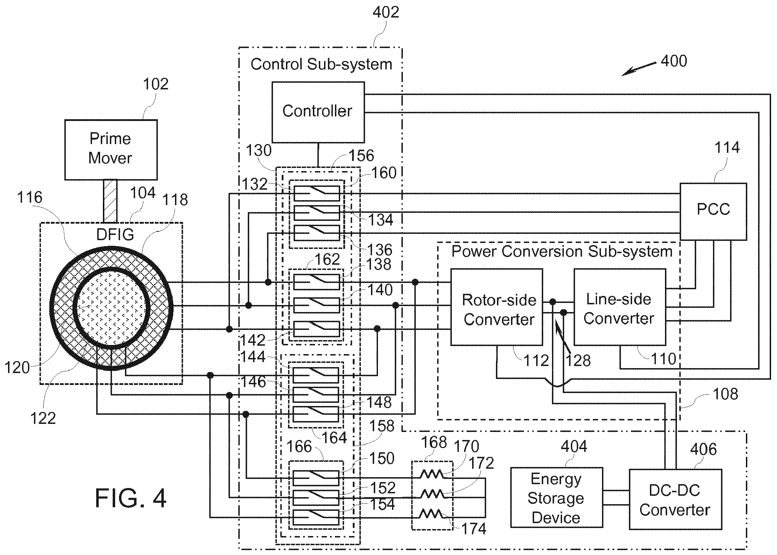

FIG. 4 is a block diagram representation of a wind based power generation system (400) in accordance with yet another embodiment of the present invention. The power generation system (400) includes the prime mover (102), the DFIG (104), a control sub-system (402), and the power conversion sub-system (108) having the rotor-side converter (112) and the line-side converter (110). In comparison to the embodiment of FIG. 1, the control sub-system (402) of FIG. 4 additionally includes an energy storage device (404) and a DC-DC converter (406). The energy storage device (404) may include one or more batteries, capacitors, or a combination thereof. The energy storage device (404) is coupled to the DC-link (128) via the DC-DC converter (406). The DC-DC converter (406) is operated as a buck converter or a boost converter and configured to control supply of DC power to the DC-link (128). In some embodiments, the controller (176) may be operatively coupled to the DC-DC converter (406) and configured to control amount of the DC power to be supplied or received from the DC-link (128).

The control sub-system (106) is configured to enhance the electrical power production by the wind based power generation system (400). In particular, the controller (176) of the control sub-system (106) is configured to control switching of the group of switches (130) such that the power generation system (400) is transitioned from a partial power conversion mode to full power conversion mode and vice-versa. During transition of the power generation system (400) from the partial power conversion mode to the full power conversion mode and vice-versa, the controller (176) is also configured to control the power flow from the energy storage device (404) or the power flow to the energy storage device (404) to reduce fluctuations of the electrical power at the PCC (114). Further details of operating the power generation system (400) is described in conjunction the flow diagram of FIGS. 5 and 6.

In certain other embodiments, the energy storage device (404) may also be coupled to the PCC (114). The energy storage device (404) may be coupled to the PCC (114) via an inverter (not shown). The inverter may be operatively coupled to the controller (176). In such embodiments, the controller (176) is configured to control electrical power to and from the energy storage device (404) via the inverter. During transition of the power generation system (400) from the partial power conversion mode to the full power conversion mode and vice-versa, the controller (176) is configured to control the power flow from the energy storage device (404) or the power flow to the energy storage device (404) to reduce fluctuations of the electrical power at the PCC (114).

FIG. 5 is a flow diagram (500) of a method for operating a power generation system such as the power generation systems of FIGS. 1-4, in accordance with certain embodiments of the present invention. For ease of explanation, the flow diagram (500) is described mostly in conjunction with the power generation system (100) of FIG. 1.

When operation of the power generation system (100) is initiated, the power generation system (100) is operated in a partial power conversion mode as default, as indicated by step (502). As previously noted, in the partial power conversion mode, the first sub-set of switches (160) and the third sub-set of switches (164) are operated in the conducting state, the second sub-set of switches (162) and the fourth sub-set of switches (166) are operated in the non-conducting state. In the partial power conversion mode, with reference to the embodiment of FIG. 2, the first sub-set of switches (220) is operated in the conducting state and the second sub-set of switches (222) is operated in the non-conducting state. Accordingly, in the partial power conversion mode, the stator winding (118) is electrically connected to the PCC (114) and the rotor winding (122) is electrically connected to the power conversion sub-system (108). In some embodiments, the controller (176) may send an appropriate control signal to each switch of the group of switches (130/216) to operate respective switches in the conductive or non-conductive states to facilitate operation in the partial power conversion mode.

Further, at step (504), at least one of a required load and an input power of the DFIG (104) for a pre-determined future time duration is estimated by the controller (176). In one embodiment, if the prime mover (102) is a renewable energy based power source such as a wind turbine or a hydro turbine, the controller (176) estimates input power of the DFIG (104). The input power of the DFIG (104) may be a mechanical power and defined in kilo-watt (kW). For example, if the prime mover (102) is a wind-turbine such as the wind turbine (302), the controller (176) estimates the possible input power of the DFIG (104) based on a forecasted wind speed. In one embodiment, the controller (176) may be configured to forecast the wind speed based on weather information data. In some embodiments, the controller (176) may receive the forecasted wind speed from an external source such as a satellite or a server computer. In another non-limiting example, if the prime mover (102) is a hydro turbine, the controller (176) estimates the input power of the DFIG (104) based on a forecasted hydro energy. In one embodiment, the controller (176) is configured to forecast the hydro energy based on weather information data. In some embodiments, the controller (176) may receive the weather information data from an external source such as a satellite or a server computer.

In some embodiments, if the prime mover (102) is a controllable system such as an engine, a gas turbine, a compressor, and the like, the controller (176) is configured to estimate the required load of the DFIG (104). The controller (176) estimates the required load of the DFIG (104) based on an historical electricity consumption pattern by electrical loads (not shown) connected to the power generation system (100) and a time of the day.

In some embodiments, the controller (176) may use one or more forecasting models to estimate the input power of the DFIG (104) and the required load of the DFIG (104). In certain embodiments, these forecasting models may be maintained in a memory device associated with the controller (176). The selection of the forecasting models may be based on an accuracy of a given forecasting model for the prevailing weather conditions for the pre-determined future time duration and based on the accuracy achieved by the given forecasting model in the past.

Further, at step (506), the estimated at least one of the required load and the input power is compared with a corresponding threshold value by the controller (176). In some embodiments, a threshold value corresponding to the estimated input power is indicative of a minimum value of the input power of the DFIG (104) below which the stator power of the DFIG (104) starts reducing to less than a predefined minimum value. The predefined minimum value of the stator power may be set by an operator of the power generation system (100). In some embodiments, a threshold value corresponding to the estimated required load is indicative of a value of electrical power requirement at the PCC (114) for which the stator power of the DFIG (104) starts reducing to less than the predefined minimum value.

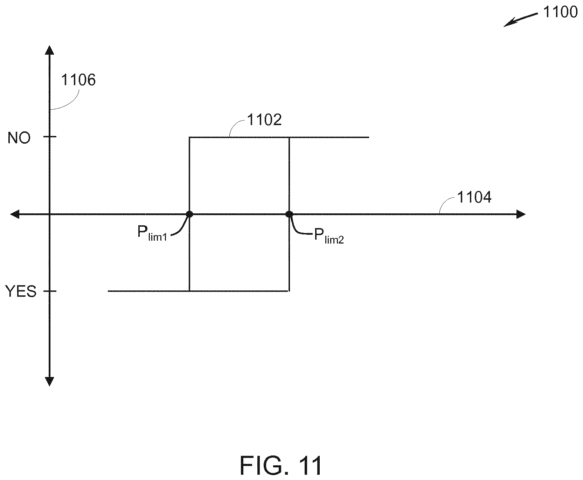

Furthermore, at step (508), a check is performed to determine whether at least one of the required load of the DFIG (104) and the input power of the DFIG (104) is less than the corresponding threshold value. In certain embodiments, the check at step (508) is performed based on a hysteresis curve (see FIG. 11), where the threshold value comprises a first threshold value and a second threshold value (described later). At step (508), if it is determined that at least one of the required load of the DFIG (104) and the input power of the DFIG (104) is less than the corresponding threshold value, the controller (176), at step (510), transitions operation of the power generation system (100) to a full power conversion mode. To transition operation of the power generation system (100) to the full power conversion mode, the controller (176) selectively controls switching of one or more of the plurality of switches (130/216). Further details of a method of transitioning the operation of the power generation system (100) into the full power conversion mode is described in conjunction with FIGS. 7, 8.

When the power generation system (100) is transitioned into the full power conversion mode, the power generation system (100) is operated in the full power conversion mode for a time duration, hereinafter referred to as an operating time, as indicated by step (512). The operating time may be equal to the predefined future time duration. After the elapse of the operating time, at step (514), at least one of the required load and an input power of the DFIG (104) are again estimated for the pre-determined future time duration by the controller (176). Further, at step (516), a check is performed again to determine whether at least one of the required load of the DFIG (104) and the input power of the DFIG (104) is less than the corresponding threshold value. In certain embodiments, the check at step (516) is performed based on the hysteresis curve (see FIG. 11), where the threshold value comprises the first threshold value and the second threshold value (described later). At step (516), if it is determined that at least one of the required load of the DFIG (104) and the input power of the DFIG (104) is less than the corresponding threshold value, a control is transferred to the step (512) and the controller (176) continues to operate the power generation system (100) in the full power conversion mode for the operating time.

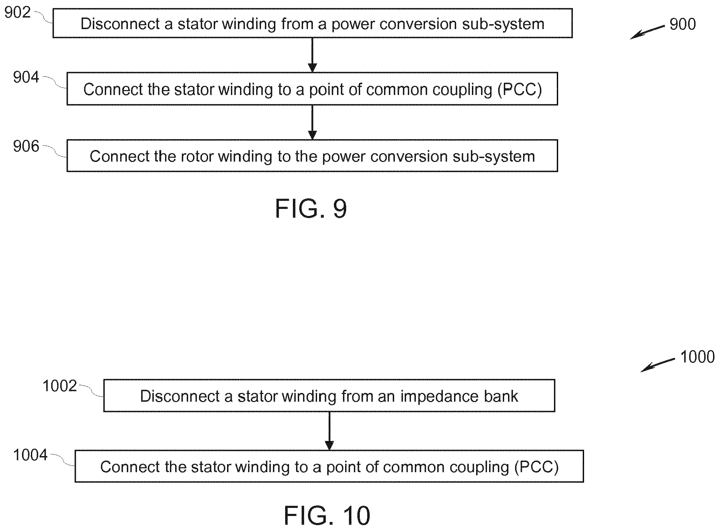

At step (516), if it is determined that at least one of the required load of the DFIG (104) and the input power of the DFIG (104) is greater than the corresponding threshold value, at step (518), the controller (176) transitions the operation of the power generation system (100) to the partial power conversion mode. The controller (176) selectively controls switching of one or more of the plurality of switches (130, 216) to transition the operation of the power generation system (100) to the partial power conversion mode. Further details of a method of transitioning the operation of the power generation system (100) into the partial power conversion mode is described in conjunction with FIGS. 9 and 10. When the power generation system (100) is transitioned into the partial power conversion mode, at step (520), the power generation system (100) is operated in the partial power conversion mode for the operating time which is equal to the predefined future time duration. Further, after the elapse of the operating time, the controller (176) moves the control to the step (504).

FIG. 6 is a flow diagram (600) of a method for operating a power generation system such as the power generation system (300) of FIG. 3, in accordance with another embodiment of the present invention.

When operation of the power generation system (300) is initiated, the power generation system (300) is operated in a partial power conversion mode as default, as indicated by step (602). As previously noted, in the partial power conversion mode, the first sub-set of switches (160) and the third sub-set of switches (164) are operated in the conducting state and the second sub-set of switches (162) and the fourth sub-set of switches (166) are operated in the non-conducting state. Accordingly, in the partial power conversion mode, the stator winding (118) is electrically connected to the PCC (114) and the rotor winding (122) is electrically connected to the power conversion sub-system (108).

Further, at step (604), a wind speed of the wind turbine (302) for a pre-determined future time duration, is estimated by the controller (176). In one embodiment, the controller (176) is configured to estimate/forecast the wind speed based on weather information data. In some embodiments, the controller (176) may receive the forecasted wind speed from an external source such as a satellite or a server computer. Further, at step (606), the estimated wind speed is compared with a predetermined wind speed by the controller (176). In some embodiments, the predetermined wind speed is indicative of a minimum value of the wind speed below which power generated by the DFIG (104) starts reducing to less than the predefined minimum value.

Further, at step (608), a check is performed to determine whether the estimated wind speed is lower than the predetermined wind speed. At step (608), if it is determined that the estimated wind speed is less than the predetermined wind speed, the controller (176), at step (610), transitions the operation of the power generation system (300) to the full power conversion mode. The controller (176) selectively controls switching of one or more of the plurality of switches (130) to transition the operation of the power generation system (100) to the full power conversion mode. Further details of the method of transitioning the power generation system (300) to the full power conversion mode is described in conjunction with FIGS. 7 and 8.

When the power generation system (300) is transitioned into the full power conversion mode, the power generation system (300) is operated in the full power conversion mode for a time duration, hereinafter referred to as an operating time, equal to the predefined future time duration as indicated by step (612). After the elapse of the operating time, at step (614), the wind speed is again estimated for the pre-determined future time duration by the controller (176). Further, at step (616), a check is performed to determine whether the estimated wind speed is less than the predetermined wind speed. At step (616), if it is determined that the estimated wind speed is lower than the predetermined wind speed, a control is transferred to the step (612) and the controller (176) continues to operate the power generation system (300) in the full power conversion mode until the end of the operating time.

At step (616), if it is determined that the estimated wind speed is greater than the predetermined wind speed, at step (618), the controller (176) transitions the operation of the power generation system (300) to the partial power conversion mode. The controller (176) selectively controls switching of one or more of the plurality of switches (130) to transition the power generation system (100) to the partial power conversion mode. Further details of a method of transitioning the power generation system (300) to the partial power conversion mode is described in conjunction with FIGS. 9 and 10. When the power generation system (300) is transitioned to the partial power conversion mode, at step (620), the power generation system (300) is operated in the partial power conversion mode for the operating time which is equal to the predefined future time duration. Further, after the elapse of the operating time, the controller (176) moves the control to the step (604).

FIG. 7 is a flow diagram (700) of a method for transitioning operation of a power generation system such as the power generation systems of FIGS. 1, 3, and 4 to the full power conversion mode, in accordance with certain embodiments of the present embodiment.

At step (702), the controller (176) disconnects the stator winding (118) from the PCC (114). Specifically, the controller (176) disconnects the stator winding (118) from the PCC (114) by controlling switching of the first sub-set of switches (160). In particular, the controller (176) sends control signals to control switching of the first sub-set of switches (160) such that the first sub-set of switches (160) is operated in the non-conducting state. Accordingly, the first sub-set of switches (160) discontinues the supply of electrical current from the stator winding (118) to the PCC (114).

Further, at step (704), the controller (176) disconnects the rotor winding (122) from the power conversion sub-system (108) by controlling switching of the third sub-set of switches (164). In particular, the controller (176) sends control signals to control switching of the third sub-set of switches (164) such that the third sub-set of switches (164) is operated in the non-conducting state. Accordingly, the third sub-set of switches (164) disconnects the rotor winding (122) from the power conversion sub-system (108).

Further, at step (706), the controller (176) connects the stator winding (118) to the power conversion sub-system (108). The controller (176) connects the stator winding (118) to the power conversion sub-system (108) by controlling switching of the second sub-set of switches (162). More particularly, the controller (176) sends control signals to control switching of the second sub-set of switches (162) such that the second sub-set of switches (162) is operated in the conducting state. Accordingly, the second sub-set of switches (162) electrically connects the stator winding (118) to the power conversion sub-system (108). Consequently, the stator winding (118) is connected to the PCC (114) via the power conversion sub-system (108).

Further, at step (708), the controller (176) connects the rotor winding (122) to the impedance bank (168). Specifically, the controller (176) connects the rotor winding (122) to the impedance bank (168) by controlling switching of the fourth sub-set of switches (166). The controller (176) sends control signals to the fourth sub-set of switches (166) to operate the fourth sub-set of switches (166) in the conducting state to connect the rotor winding (122) to the impedance bank (168). In some embodiments, each of the resistors (170, 172, 174) of the impedance bank (168) have a non-zero value. In certain embodiments, each of the resistors (170, 172, 174) of the impedance bank (168) have a zero or substantially close to zero value. In certain embodiments, when the impedance bank (168) is not employed, the rotor winding (122) is directly shorted by operating the fourth sub-set of switches (186) in the conducting state.

When the power generation system (100, 300, or 400) is transitioned to the full power conversion mode, the first sub-set of switches (160) and the third sub-set of switches (164) are operated in the non-conducting state and the second sub-set of switches (162) and the fourth sub-set of switches (166) are operated in the conducting state. Accordingly, in the full power conversion mode, the rotor winding (122) is connected to the impedance bank (168), and the stator winding (118) is coupled to the PCC (114) via the power conversion sub-system (108).

FIG. 8 is a flow diagram (800) of a method for transitioning operation of a power generation system such as the power generation system (200) of FIG. 2 to the full power conversion mode, in accordance with one embodiment of the present invention.

At step (802), the controller (176) disconnects the stator winding (118) from the PCC (114). The controller (176) disconnects the stator winding (118) from the PCC (114) by controlling switching of the first sub-set of switches (220). In particular, the controller (176) sends control signals to control switching of the first sub-set of switches (220) such that the first sub-set of switches (220) is operated in the non-conducting state. Accordingly, the first sub-set of switches (220) discontinues the supply of electrical current from the stator winding (118) to the PCC (114).

Further, at step (804), the controller (176) connects the stator winding (118) to the impedance bank (224). The controller (176) connects the stator winding (118) to the impedance bank (224) by controlling switching of the second sub-set of switches (222). The controller (176) sends control signals to the second sub-set of switches (222) to operate the second sub-set of switches (222) in the conducting state to connect the stator winding (118) to the impedance bank (224). In some embodiments, each of the resistors (226, 228, 230) of the impedance bank (224) have a non-zero value. In certain embodiments, each of the resistors (226, 228, 230) of the impedance bank (224) have a zero or substantially close to zero value. In certain embodiments, when the impedance bank (224) is not employed, the stator winding (118) is directly shorted by operating the second sub-set of switches (222) in the conducting state.

When the power generation system (200) is transitioned into the full power conversion mode, the first sub-set of switches (220) is operated in the non-conducting state and the second sub-set of switches (222) is operated in the conducting state. Accordingly, in the full power conversion mode, the stator winding (118) is connected to the impedance bank (224), and the rotor winding (122) is coupled to the PCC via the power conversion sub-system (108).

FIG. 9 is a flow diagram (900) of a method for transitioning operation of a power generation system such as the power generation system of FIGS. 1,3, and 4 in the partial power conversion mode, in accordance with one embodiment of the present invention.

At step (902), the controller (176) disconnects the stator winding (118) from the power conversion sub-system (108) by controlling switching of the second sub-set of switches (162). The controller (176) sends control signals to control switching of the second sub-set of switches (162) such that the second sub-set of switches (182) is operated in the non-conducting state. Accordingly, the second sub-set of switches (162) disconnects the stator winding (118) from the power conversion sub-system (108).

Further, at step (904), the controller (176) connects the stator winding (118) to the PCC (114) by controlling switching of the first sub-set of switches (160). The controller (176) sends control signals to control switching of the first sub-set of switches (160) such that the first sub-set of switches (160) is operated in the conducting state. Accordingly, the first sub-set of switches (160) electrically connects the stator winding (118) to the PCC (114).

Further, at step (906), the controller (176) connects the rotor winding (122) to the power conversion sub-system (108). The controller (176) sends control signals to the fourth sub-set of switches (166) to operate the fourth sub-set of switches (166) in the non-conducting state to disconnect the rotor winding (122) from the impedance bank (168) and to connect the rotor winding (122) to the power conversion sub-system (108). Subsequently, the controller (176) sends control signals to the third sub-set of switches (164) to operate the third sub-set of switches (164) in the conducting state to connect the rotor winding (122) to the power conversion sub-system (108).

When the power generation system (100, 300, or 400) is transitioned to the partial power conversion mode, the first sub-set of switches (160) and the third sub-set of switches (164) are operated in the conducting state and the second sub-set of switches (162) and the fourth sub-set of switches (166) are operated in the non-conducting state. Accordingly, in the partial power conversion mode, the rotor winding (122) is coupled to the power conversion sub-system (108) and the stator winding (118) is connected to the PCC (114).

FIG. 10 is a flow diagram (1000) of a method for transitioning operation of a power generation system such as the power generation system of FIG. 2 to the partial power conversion mode, in accordance with one embodiment of the present invention.

At step (1002), the controller (176) disconnects the stator winding (118) from the impedance bank (224) by controlling switching of the second sub-set of switches (222). The controller (176) sends control signals to control switching of the second sub-set of switches (222) such that the second sub-set of switches (222) is operated in the non-conducting state. Accordingly, the second sub-set of switches (222) disconnects the stator winding (118) from the impedance bank (224).

Further, at step (1004), the controller (176) connects the stator winding (118) to the PCC (114) by controlling switching of the first sub-set of switches (220). The controller (176) sends control signals to control switching of the first sub-set of switches (220) such that the first sub-set of switches (220) is operated in the conducting state. Accordingly, the first sub-set of switches (220) electrically connects the stator winding (118) to the PCC (114). Accordingly, in the partial power conversion mode, the rotor winding (122) is coupled to the power conversion sub-system (108) and the stator winding (118) is connected to the PCC (114).

FIG. 11 is a graphical representation (1100) of a hysteresis curve (1102), in accordance with one embodiment of the present invention. In some embodiments, the hysteresis curve (1102) is used by the controller (176) to perform the check at steps (508, 516) of FIG. 5. Reference numerals (1104) and (1106) respectively represent X-axis and Y-axis of the hysteresis curve (1102). In one embodiment, the X-axis (1104) represents an input power of the DFIG (104) and the Y-axis 1106 represents possible outcomes of the steps (508, 516) - "YES" and "NO". More particularly, an upper half of the Y-axis (1106) represents the outcome "NO" and a lower half of the Y-axis (1106) represents the outcome "YES". Data points $P_{lim1}$ and $P_{lim2}$ on the X-axis (1104) respectively represent the first threshold value and the second threshold value.

The hysteresis curve (1102) represents a transition characteristics of the power generation system (100), for example. With reference to the hysteresis curve (1102) of FIG. 11, the outcome of the steps (508, 516) of FIG. 5 is "YES" when the input power of the DFIG (104) is less than the first threshold value (P$_{lim1}$). The outcome of the steps (508, 516) of FIG. 5 is "NO" when the input power of the DFIG (104) is more than the second threshold value (P$_{lim2}$).

It is to be noted that the graphical representation (1100) is described with the X-axis (1104) representing the input power of the DFIG (104). Use of the X-axis (1104) representing the required load of the DFIG (104) or the estimated wind speed is also contemplated.

Any of the foregoing steps may be suitably replaced, reordered, or removed, and additional steps may be inserted, depending on the needs of an application.

In accordance with the embodiments described herein, power generation system configurations facilitate providing an enhanced electrical power output. When the input power and/or the required load of the DFIG (104) are less than the corresponding threshold value, the controller (176) transitions the operation of the power generation system (100, 200, 300, 400) from the partial power conversion mode to full power conversion mode. Consequently, the stator power generated by the DFIG (104) is not utilized to maintain a DC-link voltage of the DC-link (128) to a minimum required value as opposed to the traditional DFIG based power generation system operating in partial power conversion mode. Further, when the power generation system (100, 200, 300,400) is operated in the full power conversion mode, the DFIG (104) can be operated at lower operational speeds. By way of example, in case of wind based power generation system (300), electrical power can be generated even at wind speeds less than the predetermined wind speed. Further, in the embodiments of power generation systems as described herein, the electrical efficiency of the DFIG (104) can be improved due to lower core losses since the flux in the machine needs to be maintained high in the case of grid-connected stator winding (118). Consequently, the electrical power production by the power generation is enhanced leading to an increased AEP.

It will be appreciated that variants of the above disclosed and other features and functions, or alternatives thereof, may be combined to create many other different applications. Various unanticipated alternatives, modifications, variations, or improvements therein may be subsequently made by those skilled in the art and are also intended to be encompassed by the following claims. For completeness, various aspects of the invention are set out in the following numbered clauses:

1. A method for operating a power generation system (100, 200, 300, 400) comprising a doubly-fed induction generator (DFIG) (104) and a power conversion sub-system (108) coupled to the DFIG (104), the method comprising:

estimating, by a controller (176), at least one of a required load and input power of the DFIG (104) for a pre-determined future time duration;

comparing, by the controller (176), the estimated at least one of the required load and the input power with a corresponding threshold value; and

transitioning, by the controller (176), operation of the power generation system (100, 200, 300, 400) from a partial power conversion mode to a full power conversion mode by controlling switching of one or more of a plurality of switches if the estimated at least one of the required load and the input power is less than the corresponding threshold value, wherein the plurality of switches comprises a first set of switches (156, 216) coupled to a stator winding (118) of the DFIG (104).

2. The method as claimed in clause 1, wherein the first set of switches (156) comprises a first sub-set of switches (160) and a second sub-set of switches (162), and wherein:

the first sub-set of switches (160) is coupled to the stator winding (118) and a point of common coupling (PCC) (114); and
the second sub-set of switches (162) is coupled to the stator winding (118) and the power conversion sub-system (108).

3. The method as claimed in clause 2, wherein the plurality of switches further comprises a second set of switches (158) coupled to a rotor winding (122) of the DFIG (104), the second set of switches (158) comprises a third sub-set of switches (164) and a fourth sub-set of switches (166), and wherein:

the third sub-set of switches (164) is coupled to the rotor winding (122) and the power conversion sub-system (108); and
the fourth sub-set of switches (166) is coupled to the rotor winding (122) and an impedance bank (168).

4. The method as claimed in clause 3, wherein transitioning the operation of the power generation system (100, 300, 400) from the partial power conversion mode to the full power conversion mode, comprises:

disconnecting the stator winding (118) from the PCC (114) by controlling switching of the first sub-set of switches (160);
disconnecting the rotor winding (122) from the power conversion sub-system (108) by controlling switching of the third sub-set of switches (164);
connecting the stator winding (118) to the power conversion sub-system (108) by controlling switching of the second sub-set of switches (162); and
connecting the rotor winding (122) to the impedance bank (168) by controlling switching of the fourth sub-set of switches (166).

5. The method as claimed in clause 1, wherein the first set of switches (216) comprises a first sub-set of switches (220) coupled to the stator winding (118) and a point of common coupling (PCC) (114), and a second sub-set of switches (222) coupled to the stator winding (118) and an impedance bank (224), and wherein transitioning the operation of the power generation system (200) from the partial power conversion mode to the full power conversion mode comprises:

disconnecting the stator winding (118) from the PCC (114) by controlling switching of the first sub-set of switches (220); and
connecting the stator winding (118) to the impedance bank (224) by controlling switching of the second sub-set of switches (222).

6. The method as claimed in clause 1, further comprising enabling supply of electric power from an energy storage device (404) to a direct current (DC) link of the power conversion sub-system (108).
7. The method as claimed in clause 1, further comprising enabling supply of electric power from an energy storage device (404) to a point of common coupling (PCC) (114).
8. The method as claimed in claim 1, further comprising forecasting a wind speed for the pre-determined future time duration, wherein the input power of the DFIG (104) is estimated based on the forecasted wind speed.
9. The method as claimed in clause 1, further comprising forecasting a hydro energy for the pre-determined future time duration, wherein the input power of the DFIG (104) is estimated based on the forecasted hydro energy.
10. The method as claimed in clause 1, wherein the required load of the DFIG (104) is estimated based on a historical electricity consumption pattern and time of a day.
11. A power generation system (100, 200, 300, 400) comprising:

a prime mover (102);
a doubly-fed induction generator (DFIG) (104) mechanically coupled to the prime mover (102), wherein the DFIG (104) comprises a stator winding (118) and a rotor winding (122);
a power conversion sub-system (108) electrically coupled to the DFIG (104); and
a control sub-system comprising:

a plurality of switches comprising a first set of switches (156, 216) coupled to the stator winding (118) and a point of common coupling (PCC) (114); and
a controller (176) operatively coupled to the plurality of switches and configured to:

estimate at least one of a required load and an input power of the DFIG (104) for a pre-determined future time duration;
comparing the estimated at least one of the required load and the input power with a corresponding threshold value; and
transition operation of the power generation system (100, 200, 300, 400) from a partial power conversion mode to a full power conversion mode by controlling switching of one or more of the plurality of switches if the estimated at least one of the required load and the input power is less than the corresponding threshold value.

12. The power generation system (100, 200, 300, 400) as claimed in clause 11, wherein the first set of switches (156) comprises a first sub-set of switches (160) and a second sub-set of switches (162), and wherein:

the first sub-set of switches (160) is coupled to the stator winding (118) and the PCC (114); and
the second sub-set of switches (162) is coupled to the stator winding (118) and the power conversion sub-system (108).

13. The power generation system (100, 200, 300, 400) as claimed in clause 12, wherein the plurality of switches further comprises a second set of switches (158) comprising a third sub-set of switches (164) and a fourth sub-set of switches (166), and wherein:

the third sub-set of switches (164) is coupled to the rotor winding (122) and the power conversion sub-system (108); and
the fourth sub-set of switches (166) is coupled to the rotor winding (122) and an impedance bank (168).

14. The power generation system (100, 300, 400) as claimed in clause 13, wherein to transition the operation of the power generation system from the partial power conversion mode to the full power conversion mode, the controller (176) is configured to:

disconnect the stator winding (118) from the PCC (114) by controlling switching of the first sub-set of switches (160);

connect the stator winding (118) to the power conversion sub-system (108) by controlling switching of the second sub-set of switches (162);

disconnect the rotor winding (122) from the power conversion sub-system (108) by controlling switching of the third sub-set of switches (164); and

connect the rotor winding (122) to the impedance bank (168) by controlling switching of the fourth sub-set of switches (166).

15. The power generation system (200) as claimed in clause 11, wherein the first set of switches comprises a first sub-set of switches (220) coupled to the stator winding (118) and the PCC (114), and a second sub-set of switches (222) coupled to the stator winding (118) and an impedance bank (224), and wherein to transition the operation of the power generation system (200) from the partial power conversion mode to the full power conversion mode, the controller (176) is configured to:

disconnect the stator winding (118) from the PCC (114) by controlling switching of the first sub-set of switches (220); and

connect the stator winding (118) to the impedance bank (224) by controlling switching of the second sub-set of switches (222).

16. The power generation system (100, 200, 300, 400) as claimed in clause 11, wherein the prime mover (102) comprises at least one of a wind turbine (302), a hydro turbine, a gas turbine, and an engine.

17. The power generation system (400) as claimed in clause 11, further comprising an energy storage device (404) coupled to a direct current (DC) link of the power conversion sub-system (108) via a DC-DC converter, wherein the controller (176) is configured control flow of electric power from the energy storage device (404) to the DC-link via the DC-DC converter to regulate electric power at the PCC (114) when the power generation system (400) is transitioning from the partial power conversion mode to the full power conversion mode or vice-versa.

18. A method for operating a power generation system (300) comprising a wind turbine (302), a doubly-fed induction generator (DFIG) (104) coupled to the wind turbine (302), and a power conversion sub-system (108) coupled to the DFIG (104), the method comprising:

estimating, by a controller (176), a wind speed for a pre-determined future time duration;

comparing, by the controller (176), the estimated wind speed with a threshold value; and

transitioning, by the controller (176), operation of the power generation system (300) from a partial power conversion mode to a full power conversion mode by controlling switching of one or more of a plurality of switches if the estimated wind speed is less than the threshold value, wherein the plurality of switches comprises a first set of switches (156, 216) coupled to a stator winding (118) of the DFIG (104).

19. The method as claimed in clause 18, wherein the first set of switches (156) comprises a first sub-set of switches (160) and a second sub-set of switches (162), and wherein:

the first sub-set of switches (160) is coupled to the stator winding (118) and a point of common coupling (PCC) (114); and

the second sub-set of switches (162) is coupled to the stator winding (118) and the power conversion sub-system (108).

20. The method as claimed in clause 19, wherein the plurality of switches further comprises a second set of switches (158) coupled to a rotor winding (122) of the DFIG (104), wherein the second set of switches comprises a third sub-set of switches (164) and a fourth sub-set of switches (166), and wherein:

the third sub-set of switches (164) is coupled to the rotor winding (122) and the power conversion sub-system (108); and

the fourth sub-set of switches (166) is coupled to the rotor winding (122) and an impedance bank (168).

21. The method as claimed in clause 20, wherein transitioning the operation of the power generation system (300) from the partial power conversion mode to the full power conversion mode, comprises:

disconnecting the stator winding (118) from the PCC (114) by controlling switching of the first sub-set of switches (160);

connecting the stator winding (118) to the power conversion sub-system (108) by controlling switching of the second sub-set of switches (162);

disconnecting the rotor winding (122) from the power conversion sub-system (108) by controlling switching of the third sub-set of switches (164); and

connecting the rotor winding (122) to the impedance bank (168) by controlling switching of the fourth sub-set of switches (166).

22. A power generation system (300) comprising:

a wind turbine;
a doubly-fed induction generator (DFIG) mechanically coupled to the wind turbine, wherein the DFIG comprises a stator winding and a rotor winding (122);

a power conversion sub-system (108) electrically coupled to the DFIG; and

a control sub-system comprising:

a plurality of switches comprising a first set of switches (156) coupled to the stator winding and a point of common coupling (PCC) and a second set of switches (158) coupled to the rotor winding (122) and the power conversion sub-system (108); and

a controller (176) operatively coupled to the plurality of switches and configured to:

estimate a wind speed for a pre-determined future time duration;

compare the estimated wind speed with a threshold value; and

transition operation of the power generation system (300) from a partial power conversion mode to a full power conversion mode by controlling switching of one or more of a plurality of switches if the estimated wind speed is less than the threshold value.

**Claims**

1. A method for operating a power generation system (100, 200, 300, 400) comprising a doubly-fed induction generator (DFIG) (104) and a power conversion sub-system (108) coupled to the DFIG (104), the method comprising:

estimating, by a controller (176), at least one of a required load and input power of the DFIG (104) for a pre-determined future time duration; comparing, by the controller (176), the estimated at least one of the required load and the input power with a corresponding threshold value; and

transitioning, by the controller (176), operation of the power generation system (100, 200, 300, 400) from a partial power conversion mode to a full power conversion mode by controlling switching of one or more of a plurality of switches if the estimated at least one of the required load and the input power is less than the corresponding threshold value, wherein the plurality of switches comprises a first set of switches (156, 216) coupled to a stator winding (118) of the DFIG (104).

2. The method as claimed in claim 1, wherein the first set of switches (156) comprises a first sub-set of switches (160) and a second sub-set of switches (162), and wherein:

the first sub-set of switches (160) is coupled to the stator winding (118) and a point of common coupling (PCC) (114); and the second sub-set of switches (162) is coupled to the stator winding (118) and the power conversion sub-system (108).

3. The method as claimed in claim 1 or claim 2, wherein the plurality of switches further comprises a second set of switches (158) coupled to a rotor winding (122) of the DFIG (104), the second set of switches (158) comprises a third sub-set of switches (164) and a fourth sub-set of switches (166), and wherein:

the third sub-set of switches (164) is coupled to the rotor winding (122) and the power conversion sub-system (108); and the fourth sub-set of switches (166) is coupled to the rotor winding (122) and an impedance bank (168).

4. The method as claimed in claim 3, wherein transitioning the operation of the power generation system (100, 300, 400) from the partial power conversion mode to the full power conversion mode, comprises:

disconnecting the stator winding (118) from the PCC (114) by controlling switching of the first sub-set of switches (160); disconnecting the rotor winding (122) from the power conversion sub-system (108) by controlling switching of the third sub-set of switches (164); connecting the stator winding (118) to the power conversion sub-system (108) by controlling switching of the second sub-set of switches (162); and connecting the rotor winding (122) to the impedance bank (168) by controlling switching of the fourth sub-set of switches (166).

5. The method as claimed in any preceding claim, wherein the first set of switches (216) comprises a first sub-set of switches (220) coupled to the stator winding (118) and a point of common coupling (PCC) (114), and a second sub-set of switches (222) coupled to the stator winding (118) and an impedance bank (224), and wherein transitioning the operation of the power generation system (200) from the partial power conversion mode to the full power conversion mode comprises:

disconnecting the stator winding (118) from the PCC (114) by controlling switching of the first sub-set of switches (220); and

connecting the stator winding (118) to the impedance bank (224) by controlling switching of the second sub-set of switches (222).

6. The method as claimed in any preceding claim, further comprising enabling supply of electric power from an energy storage device (404) to a direct current (DC) link of the power conversion sub-system (108).

7. The method as claimed in any preceding claim, further comprising enabling supply of electric power from an energy storage device (404) to a point of common coupling (PCC) (114).

8. The method as claimed in any preceding claim, further comprising forecasting a wind speed for the pre-determined future time duration, wherein the input power of the DFIG (104) is estimated based on the forecasted wind speed.

9. The method as claimed in any preceding claim, further comprising forecasting a hydro energy for the pre-determined future time duration, wherein the input power of the DFIG (104) is estimated based on the forecasted hydro energy.

10. The method as claimed in any preceding claim, wherein the required load of the DFIG (104) is estimated based on a historical electricity consumption pattern and time of a day.

11. A power generation system (100, 200, 300, 400) comprising:

a prime mover (102);
a doubly-fed induction generator (DFIG) (104) mechanically coupled to the prime mover (102), wherein the DFIG (104) comprises a stator winding (118) and a rotor winding (122);
a power conversion sub-system (108) electrically coupled to the DFIG (104); and
a control sub-system comprising:

a plurality of switches comprising a first set of switches (156, 216) coupled to the stator winding (118) and a point of common coupling (PCC) (114); and
a controller (176) operatively coupled to the plurality of switches and configured to:

estimate at least one of a required load and an input power of the DFIG (104) for a pre-determined future time duration;
comparing the estimated at least one of the required load and the input power with a corresponding threshold value;

and
transition operation of the power generation system (100,200,300, 400) from a partial power conversion mode to a full power conversion mode by controlling switching of one or more of the plurality of switches if the estimated at least one of the required load and the input power is less than the corresponding threshold value.

12. The power generation system (100, 200, 300, 400) as claimed in claim 11, wherein the first set of switches (156) comprises a first sub-set of switches (160) and a second sub-set of switches (162), and wherein:

the first sub-set of switches (160) is coupled to the stator winding (118) and the PCC (114); and
the second sub-set of switches (162) is coupled to the stator winding (118) and the power conversion sub-system (108).

13. The power generation system (100, 200, 300, 400) as claimed in claim 11 or claim 12, wherein the plurality of switches further comprises a second set of switches (158) comprising a third sub-set of switches (164) and a fourth sub-set of switches (166), and wherein:

the third sub-set of switches (164) is coupled to the rotor winding (122) and the power conversion sub-system (108); and
the fourth sub-set of switches (166) is coupled to the rotor winding (122) and an impedance bank (168).

14. The power generation system (100, 300, 400) as claimed in claim 13, wherein to transition the operation of the power generation system from the partial power conversion mode to the full power conversion mode, the controller (176) is configured to:

disconnect the stator winding (118) from the PCC (114) by controlling switching of the first sub-set of switches (160);
connect the stator winding (118) to the power conversion sub-system (108) by controlling switching of the second sub-set of switches (162);
disconnect the rotor winding (122) from the power conversion sub-system (108) by controlling switching of the third sub-set of switches (164); and
connect the rotor winding (122) to the impedance bank (168) by controlling switching of the fourth sub-set of switches (166).

**15.** The power generation system (200) as claimed in any of claims 11 to 14, wherein the first set of switches comprises a first sub-set of switches (220) coupled to the stator winding (118) and the PCC (114), and a second sub-set of switches (222) coupled to the stator winding (118) and an impedance bank (224), and wherein to transition the operation of the power generation system (200) from the partial power conversion mode to the full power conversion mode, the controller (176) is configured to:

disconnect the stator winding (118) from the PCC (114) by controlling switching of the first sub-set of switches (220); and

connect the stator winding (118) to the impedance bank (224) by controlling switching of the second sub-set of switches (222).

FIG. 1

FIG. 2

EP 3 402 065 A1

18

FIG. 3

FIG. 4

EP 3 402 065 A1

Operate a power generation system in a partial power conversion mode — 502

Estimate at least one of a required load and input power of a DFIG for a pre-determined future time duration — 504

Compare at least one of the required load and the input power with a corresponding threshold value — 506

Is at least one of the required load and input power of a DFIG less than a corresponding threshold value for the predetermined future time duration? — 508

NO

YES

Transition operation of the power generation system to a full power conversion mode — 510

Operate the power generation system in the full power conversion mode for a time duration equal to the pre-determined future time duration — 512

Operate the power generation system in the full power conversion mode for a time duration equal to the pre-determined future time duration — 520

Transition operation of the power generation system to a partial power conversion mode — 518

Is at least one of a required load and input power of a DFIG less than a corresponding threshold value for the predetermined future time duration? — 516

YES

NO

Estimate at least one of a required load and input power of a DFIG for a pre-determined future time duration — 514

500

FIG. 5

EP 3 402 065 A1

FIG. 6

Flowchart 600:

602 — Operate a power generation system in a partial power conversion mode

604 — Estimate a wind speed corresponding to a wind turbine for a pre-determined future time duration

606 — Compare the estimated wind speed with a predetermined wind speed

608 — Is the estimated wind speed less than the predetermined wind speed for the predetermined future time duration? — NO / YES

610 — Transition operation of the power generation system to a full power conversion mode

612 — Operate the power generation system in the full power conversion mode for a time duration equal to the pre-determined future time duration

614 — Estimate a wind speed corresponding to a wind turbine for a pre-determined future time duration

616 — Is the estimated wind speed less than the predetermined wind speed for the predetermined future time duration? — YES / NO

618 — Transition operation of the power generation system to a partial power conversion mode

620 — Operate the power generation system in the full power conversion mode for a time duration equal to the pre-determined future time duration

EP 3 402 065 A1

702 — Disconnect a stator winding from a point of common coupling (PCC)

└─→ 700

704 — Disconnect a rotor winding a power conversion sub-system

706 — Connect the stator winding to the power conversion sub-system

708 — Connect the rotor winding to an impedance bank

## FIG. 7

└─→ 800

802 — Disconnect a stator winding from a point of common coupling (PCC)

804 — Connect the stator winding to an impedance bank

## FIG. 8

902 — Disconnect a stator winding from a power conversion sub-system

900

904 — Connect the stator winding to a point of common coupling (PCC)

906 — Connect the rotor winding to the power conversion sub-system

## FIG. 9

EP 3 402 065 A1

1000

1002 — Disconnect a stator winding from an impedance bank

1004 — Connect the stator winding to a point of common coupling (PCC)

## FIG. 10

FIG. 11

Europäisches
Patentamt

European
Patent Office

Office européen
des brevets

# EUROPEAN SEARCH REPORT

Application Number

EP 18 17 1501

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 1 804 372 A2 (KOREA ELECTRO TECH RES INST [KR]) 4 July 2007 (2007-07-04)<br>* abstract *<br>* paragraphs [0002] - [0004], [0014] *<br>* figures 4b, 13a,13b *<br>----- | 1-15 | INV.<br>H02P9/00<br>F03D7/04 |
| Y | EP 2 230 637 A1 (GEN ELECTRIC [US]) 22 September 2010 (2010-09-22)<br>* abstract *<br>* paragraphs [0004], [0022], [0024] *<br>* claims 1,8 *<br>* figures 1,4 *<br>----- | 1-15 | |
| A | EP 2 778 352 A1 (GEN ELECTRIC [US]) 17 September 2014 (2014-09-17)<br>* abstract *<br>* paragraphs [0001], [0013] - [0018] *<br>* claim 8 *<br>* figures 1-3 *<br>----- | 1-15 | |
| | | | TECHNICAL FIELDS SEARCHED (IPC)<br><br>H02P<br>F03D |

The present search report has been drawn up for all claims

| Place of search | Date of completion of the search | Examiner |
|---|---|---|
| Munich | 2 October 2018 | Vanata, Daniela |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 17 1501

This annex lists the patent family members relating to the patent documents cited in the above-mentioned European search report.
The members are as contained in the European Patent Office EDP file on
The European Patent Office is in no way liable for these particulars which are merely given for the purpose of information.

02-10-2018

| Patent document cited in search report | | Publication date | Patent family member(s) | | Publication date |
|---|---|---|---|---|---|
| EP 1804372 | A2 | 04-07-2007 | EP<br>US | 1804372 A2<br>2007182383 A1 | 04-07-2007<br>09-08-2007 |
| EP 2230637 | A1 | 22-09-2010 | CN<br>EP<br>US | 101846037 A<br>2230637 A1<br>2010237617 A1 | 29-09-2010<br>22-09-2010<br>23-09-2010 |
| EP 2778352 | A1 | 17-09-2014 | EP<br>US | 2778352 A1<br>2014265327 A1 | 17-09-2014<br>18-09-2014 |

EPO FORM P0459

For more details about this annex : see Official Journal of the European Patent Office, No. 12/82